# EUROPÄISCHE PATENTSCHRIFT

(11) **EP 2 420 618 B1**
(45) Veröffentlichungstag und Bekanntmachung des Hinweises auf die Patenterteilung: **08.05.2013**
(21) Anmeldenummer: 11173444.8
(22) Anmeldetag: 11.07.2011
(51) Int. Cl.: F16C 13/02, D21G 1/02, D21G 1/00

(54) **Verfahren zur Vermeidung von Barringerscheinungen**
Method for avoiding barring appearances
Procédé destiné à éviter les phénomènes de barrage

(30) Priorität: 17.08.2010 DE 102010039387
(43) Veröffentlichungstag der Anmeldung: 22.02.2012
(73) Patentinhaber: Voith Patent GmbH, 89520 Heidenheim (DE)
(72) Erfinder: Niemann, Jochen, 47804 Krefeld (DE); Krüger, Lars, 47803 Krefeld (DE); van Haag, Rolf, 47647 Kerken (DE)

(56) Entgegenhaltungen:
- DE-A1- 3 638 070
- DE-A1-102006 062 284

## Beschreibung

Die Erfindung betrifft ein Verfahren zur Vermeidung von Barringerscheinungen in einem Walzensystem, bestehend aus mindestens einer Walze und einer Gegenwalze, wobei die eine Walze mit einer feststehenden Zentralachse und mit einem um diese Zentralachse rotierenden Walzenmantel sowie mit den folgenden Merkmalen versehen ist:
a) eine im Inneren der Walze befindliche erste Kammer ist mit einer Flüssigkeit gefüllt, die zumindest mittelbar eine hydraulische Stützkraft von der Zentralachse auf den Walzenmantel übertragen kann;
b) die erste Kammer ist über wenigstens eine Drossel, die einen Drosselquerschnitt und eine Drossellänge aufweist, mit einer ebenfalls im Inneren der Walze befindlichen zweiten Kammer verbunden;
c) die zweite Kammer ist nur teilweise mit Flüssigkeit gefüllt, so dass sich darin, aufgrund von Druckänderungen in der ersten Kammer, ein veränderbarer Flüssigkeitsfüllungsgrad einstellen kann.

Es handelt sich um eine Walze, die bedingt durch ihren spezifischen Einsatz zu unerwünschten Vibrationen angeregt werden kann. Genau gesagt handelt es sich um die Walze gemäß der DE-A- 36 38 070 mit einer zusätzlichen erfinderischen Ausgestaltung, um ein Verfahren durchführen zu können. Von Vornherein wurde der komplette erste Anspruch der DE-A- 36 38 070 für diese Erfindung zum Bestandteil des Oberbegriffs des Verfahrensanspruchs.

In der Regel besitzt die Walze eine elastische Oberflächenschicht, in die sich bei ungünstigen Resonanzerscheinungen Längsstreifen-Muster einprägen. Das geht so weit, dass die Qualität des erzeugten Papiers unverkäuflich werden kann.

Die Vibrationsprobleme in Pressenpartien und Glättwerken von Papiermaschinen sind bereits in der DE-A- 36 38 070 erwähnt worden. Wie dort erklärt, handelt es sich bei diesen unerwünschten Schwingungen hauptsächlich um Kontaktschwingungen zwischen zwei Walzen. Die erfindungsgemäße Walze bildet also in der Regel mit einer Gegenwalze, insbesondere einer Thermowalze, einen Pressspalt, durch den die zu behandelnde Bahn läuft. Vorzugsweise kann sie als Durchbiegungsausgleichswalze ausgebildet sein, das heißt, die Erfindung ist sowohl bei S-Walzen als auch bei Biegeeinstellwalzen mit Stützelementen oder über die Länge der Walze wirkenden Schuhen einsetzbar. Dabei können sich die im Oberbegriff genannten Kammern in der Achse oder seitlich neben der Achse, in den Schuhen, in den Stützelementen oder anderen Freiräumen innerhalb des rotierenden Walzenmantels ausgebildet sein.

Für die Dämpfung solcher Systeme gibt es inzwischen verschiedene Lösungen. Zur Dämpfung oder zur aktiven Schwingungsunterdrückung im Bereich von 200 bis 1000 Hz in einer Walze ist das Patent DE-A-100 08 800 bekannt. Walzen der dort beschriebenen Art sind prinzipiell in einfacher Anzahl oder in mehrfacher Anzahl in Walzensystemen, beispielsweise Multinip-Kalandern, einsetzbar. Allerdings ist das Verfahren teuer und es bedarf eines erheblichen konstruktiven und fertigungstechnischen Aufwandes, da dem Walzenmantel durch einen Aktuator eine aktive gegen den Mantel wirkende Schwingung aufgeprägt wird. Weiterhin kann die Lösung nicht ohne weiteres auf eine schwimmende Walze angewendet werden, da das Ölvolumen in der ersten Kammer meist in der Größenordnung von 18 Litern und mehr ist (bei >5m Arbeitsbreite). Für schwimmende Walzen sind diverse Maßnahmen aus der Literatur bekannt, beschrieben z.B.: DE-A- 10 2006 062 284. Die hier bekannt gemachten Maßnahmen sind jedoch nicht geeignet, um ein Barring des Walzenmantels im Bereich von 80 bis 500Hz wirkungsvoll zu bekämpfen, da das große Ölvolumen im Inneren der Walze eine steife Ankoppelung von Achse und drehendem Mantel behindert.

Es ist Aufgabe der vorliegenden Erfindung, die bekannte Walze gemäß der DE-A- 36 38 070 in ihrer Dämpfungsarbeit zu verbessern.

Diese Aufgabe wird dadurch gelöst, dass durch Sensoren aufgenommene Signale zum Schwingungsverhalten der Achse und des Mantels und von der Drehzahl des Mantels in einer Rechnereinheit ausgewertet werden und daraufhin während des Betriebs des Walzensystems
- Drosselanzahl und/oder
- Drosselquerschnitt und/oder
- Drossellänge
derart verändert werden, dass der Phasenversatz zwischen der Schwingung des Walzenmantels und der Schwingung der Achse einen Wert von 50° bis 130° einnimmt.

Die Erfindung geht aus von der bekannten Walzen-Bauart nach der DE-A- 36 38 070 , bei der zwischen einer feststehenden, die Walze durchdringenden Zentralachse und einem um diese Zentralachse rotierenden Walzenmantel mindestens eine flüssigkeitsgefüllte erste Kammer vorgesehen ist und bei der diese erste Kammer über eine Drossel, die Bewegungsenergie in Reibungswärme umsetzen kann, mit einer zweiten Kammer verbunden ist. Es ist vorgesehen, dass die in der zweiten Kammer befindliche Flüssigkeit die zweite Kammer nur teilweise ausfüllt, so dass sich in der zweiten Kammer das Flüssigkeitsvolumen beliebig einstellen, d.h. insbesondere sich mit hoher Geschwindigkeit verändern kann.

In der DE-A- 36 38 070 als im Wesentlichen passives und auf einen bestimmten Frequenzbereich eingestelltes System ging man noch davon aus, dass die Zentralachse als schwere Masse angesehen werden muss, deren Biegeeigenfrequenz um ein Vielfaches niedriger als die zu dämpfende Vibrationsfrequenz des Walzenmantels ist. Entsprechend ruhte der zentrale Gedanke der damaligen Erfindung auf einer einmal richtig eingestellten, energievernichtenden Flüssigkeitsströmung durch Drosseln bestimmten ausgewählten Querschnitts in eine zweite Kammer, vorzugsweise eine Blasenspeicherkammer. Allenfalls die Festsetzung des Drucks in der "Blase" wurde ggf. veränderbar gestaltet.

Die Erfinder haben nun erkannt, dass diese Annahmen nicht vollständig sind. Die Barringprobleme treten nämlich bei zwei Eigenmodi auf. Dies sind
1) die erste gekoppelte Jocheigenfrequenz, welche aus einer gleichphasigen Schwingung von Thermowalze und Walzenmantel sowie einer gegenphasigen Schwingung der Achse gekennzeichnet ist. Diese Frequenz liegt bei Softkalandern im Bereich von 4...6 m Arbeitsbreite und Walzendurchmessern von 500 bis 800 mm bei ca. 130 bis 280Hz, meist bei ca. 200 Hz bei Produktionsgeschwindigkeiten im Bereich von 300 m/min bis 1500m/min. Es muss angemerkt werden, dass rechnerisch die "erste" Jocheigenfrequenz der Achse alleine im Bereich von 12 bis 35 Hz liegt. Erst durch die Koppelung von Thermowalze, Walzenmantel, Achse, Ölpolster plus Papier steigt die Eigenfrequenz des Systems stark an.
2) die erste Kontakteigenfrequenz, wo der Walzenmantel und die Thermowalze gegenphasig schwingen und die Achse sich gleichphasig zum Mantel bewegt, allerdings mit deutlich geringerer Amplitude. Diese Frequenz liegt beispielsweise bei Softkalandern im Bereich von 4...6 m Arbeitsbreite und Walzendurchmessern von 500 bis 800 mm bei ca. 350 bis 550 Hz, meist bei ca. 400 Hz bei Produktionsgeschwindigkeiten im Bereich von 300 m/min bis 1500m/min. Exakter ist hier die Annahme, dass die Achse an der Kontaktschwingung eher nicht beteiligt ist, sondern eine schwere Masse darstellt, die sich nicht mit bewegt (siehe vorher).

Um das System optimal abstimmen zu können, wird beispielsweise mindestens ein Beschleunigungssensor in die Achse integriert, um die Schwingung der Achse zu detektieren. Zusätzlich wird die Schwingung/Bewegung des Walzenmantels detektiert (optisch, kapazitiv, durch Wirbelstromsensoren oder durch Druckmessung etc.). Um ein gutes Regelverhalten zu erreichen, ist es sinnvoll die Messung an mehreren Stellen über der Arbeitsbreite gleichzeitig durchzuführen. Sinnvoll als Messpunkte sind z.B. 1/3 und 2/3 der Arbeitsbreite der Papierbahn. Weiterhin wird ein Triggersignal von der Drehung der Walze benötigt. Die gewonnenen Messergebnisse werden einer Rechnereinheit zugeführt. Aufgrund der Bewertung wird dann die Drosselanzahl und/oder der Drosselbreite und/oder die Drossellänge eingestellt.

Bevorzugt wird der Phasenversatz zwischen der Schwingung des Walzenmantels und der Schwingung der Achse auf einen Wert von 80° bis 100° eingestellt. In diesem Bereich ist für eine optimale Dämpfung gesorgt.

Mit Vorteil werden Drosselanzahl und/oder Drosselquerschnitt und/oder Drossellänge automatisch, vorzugsweise in einem Regelkreis, mechanisch, elektrisch, pneumatisch oder hydraulisch eingestellt. Dazu ist eine Stellanordnung, beispielsweise zwei sich kämmende Schieber notwendig, die zum Beispiel motorisch zueinander versetzt werden können, um somit den Drosselwiderstand entsprechend anpassen. Mit diesem einfachen Verfahren lassen sich alle Schwingungsformen wirkungsvoll abdecken und dämpfen.

Bevorzugt werden Drosselanzahl und/oder Drosselquerschnitt und/oder Drossellänge aufgrund eines Vergleichs der Auswertungsergebnisse mit in der Rechnereinheit in einem Speicher hinterlegten Kenngrößen verändert. So können die Drosselwiderstände aufgrund von Betriebsparametern eingestellt werden, zu denen man vorher die wahrscheinlichen Eigenresonanzen berechnet und aufstellt hat.

Dabei ist es von Vorteil, wenn die Kenngrößen von wenigstens einem der folgenden Parameter abhängig sind:
- Grammatur des jeweils im Nip befindlichen Papiers
- Faserrohstoff bzw. Füllstoffe im Papier
- Linienlast
- Geschwindigkeit
- Temperatur.

Die Berücksichtigung aller dieser Einflussfaktoren auf die geeignetste Einstellung der Drossel ist äußerst komplex. Inzwischen sind jedoch zahlreiche Kennwerte in Versuchen ermittelt worden, die die entsprechende Richtgröße für die Drosseleinstellung vorgeben.

Die zweite Kammer ist im einfachsten Fall, d.h. bei Atmosphärendruck in den Kammern, ein Volumen-Ausgleichgefäß, dessen oberer, mit Luft gefüllter Bereich über eine Be- und Entlüftungsleitung mit der freien Umgebung der Walze verbunden ist. Meistens wird jedoch in der ersten Kammer ein Überdruck eingestellt. In diesem Falle ist die zweite Kammer, die in der Regel unmittelbar in oder an der Zentralachse angeordnet ist, als elastisch nachgiebiger Druckspeicher ausgebildet. Es wirkt dem Flüssigkeitsdruck in der zweiten Kammer der Druck eines Gaspolsters, die Kraft einer Feder oder dgl. entgegen.

Die Höhe des Gasdruckes bzw. die Federkraft stellt man vorzugsweise zusätzlich ein, so dass man die Vibrationsdämpfung optimieren kann. Selbstverständlich kann man anstelle nur einer einzigen zweiten Kammer auch mehrere Kammern dieser Art vorsehen, um den optimalen Dämpfungseffekt zu erzielen.

Bei Vorhandensein eines Gaspolsters wird die Dämpfungswirkung verbessert, wenn in der zweiten Kammer eine nachgiebige Zwischenwand vorgesehen ist. Hierdurch wird das Gaspolster von der Flüssigkeit getrennt und somit vermieden, dass Gasblasen über die Engstellen in die erste Flüssigkeitskammer gelangen.

Eine sehr einfache bevorzugte Ausgestaltung der Erfindung sieht vor, das Gasvolumen in den zweiten Kammern in Form von an beiden Enden verschlossenen gasgefüllten Schläuchen bereitzustellen.

In einer bevorzugten Ausgestaltung der Walze ist vorgesehen, den Zwischenraum zwischen der Zentralachse und dem rotierenden Walzenmantel durch Längsdichtleisten und Stirndichtungen in zwei annähernd gleich große halbringförmige und mit Flüssigkeit gefüllte Kammern zu unterteilen; d.h. es sind zwei "erste Kammern" vorhanden. Wesentlich ist nun, dass jeder ersten Kammer mindestens eine als Druckspeicher ausgebildete zweite Kammer zugeordnet wird und dass mindestens eine der Verbindungsleitungen (zwischen einer ersten und einer zweiten Kammer) als Drossel ausgebildet ist. Die an die andere (halbringförmige) Kammer angeschlossenen Verbindungsleitungen zu der zugeordneten zweiten Kammer (bzw. zu den zugeordneten zweiten Kammern) können mit oder ohne Engstellen ausgeführt werden. Wenn damit gerechnet werden muss, dass eine der beiden ersten Kammern nicht immer ganz mit Flüssigkeit gefüllt ist, dann entfallen die Engstellen an derjenigen ersten Kammer, in welcher der niedrigere Druck herrscht und somit zeitweise ein Volumenanteil an Gas erwartet wird.

Die Erfindung ist anhand der Fig. 1 bis 6 näher erläutert.
Fig. 1 ist ein schematischer Längsschnitt durch eine Walze mit Vibrationsdämpfung.
Fig. 2 ist ein Querschnitt durch eine ähnliche Walze wie Fig. 1, entlang deren Schnittlinie II-II.
Fig. 3 ist ein Querschnitt durch eine Walze mit anderer Anordnung der Dämpfungsglieder.
Fig. 4 ist ein vergrößerter Längsschnitt durch die zweite Kammer mit veränderlichem Drosselquerschnitt
Fig. 5 ist eine Draufsicht auf die zweite Kammer mit veränderlichem Drosselquerschnitt.
Fig. 6 zeigt einen Querschnitt durch die Walze mit einer Steueranordnung.

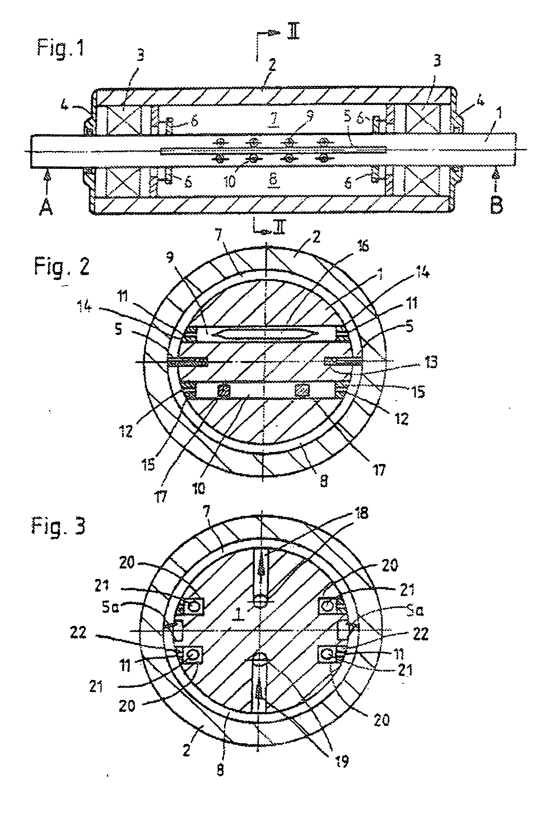

In der Fig. 1 bedeutet 1 die feststehende Zentralachse, die bei A und B auf dem nicht gezeichneten Maschinengestell bzw. an beweglichen Hebeln abgestützt ist. Um diese Zentralachse 1 ist ein rotierbarer Walzenmantel 2 in Pendelrollenlagern 3 gelagert. Seitlich ist der rotierende Mantel 2 durch Deckel 4 verschlossen. Das Innere des Walzenmantels 2 ist mittels zweier Längsdichtungen 5 und Stirndichtanordnungen 6 in zwei halbringförmige Kammern 7 und 8 unterteilt, von denen mindestens eine im Betriebszustand vollständig mit Flüssigkeit gefüllt ist. Flüssigkeitszu- und Abführleitungen von aussen zu den Kammern 7 und 8 sind nicht gezeigt, werden aber in der Regel vorhanden sein. In der Zentralachse 1 sind Querbohrungen 9, 10 vorgesehen, die in diesem Fall die zweite Kammer bilden und die über Drosseln 11, 12 mit den flüssigkeitsgefüllten Kammern 7, 8 verbunden sind. In Fig. 1 ist angenommen, die Zentralachse 1 habe über ihre Länge gleichbleibenden Durchmesser. In der Regel ist jedoch der Durchmesser der Zentralachse 1 im Bereich zwischen den beiden Lagern 3 nur wenig kleiner als der Innendurchmesser des Walzenmantels, so wie in den anderen Figuren dargestellt.

In Fig. 2 erkennt man wieder die Zentralachse 1 mit dem sie umgebenden Walzenmantel 2 und die Längsdichtungen 5, die durch Federn 13 an den Walzenmantel 2 angepresst werden. Die obere halbringförmige Kammer 7 ist über Drosseln 11 (in Stopfen 14 eingearbeitet) mit der Querbohrung 9 verbunden. Im Inneren der Bohrung 9 befindet sich ein gasgefüllter, hermetisch verschlossener Schlauchabschnitt 16.

Die untere Querbohrung 10 ist über Drosseln 12 in Stopfen 15 mit der unteren Flüssigkeitskammer 8 verbunden. In der Bohrung 10 befinden sich horizontal frei bewegliche zur Wandung der Bohrung 10 dichtende Schwebekolben 17. Der zwischen den Schwebekolben befindliche Bohrungsabschnitt ist gasgefüllt.

In Fig. 3, die ebenfalls einen Querschnitt durch eine Walze darstellt, bedeuten 1 die Zentralachse, 2 den Walzenmantel, 5a die Längsdichtungen, 7 und 8 die flüssigkeitsgefüllten Kammern, 18 eine von aussen kommende Flüssigkeitszuleitung und 19 eine nach aussen führende Entleerleitung. In die Zentralachse 1 sind oberhalb und unterhalb einer jeden Längsdichtung 5a je eine Längsnute 20 eingefräst und in jeder dieser Nuten liegt ein hermetisch verschlossener Schlauch 21, der ein Gas enthält. Der durch die Nuten 20 gebildete Hohlraum ist durch Deckel 22 verschlossen, in die Drosseln 11 (z.B. Drosselbohrungen) eingearbeitet sind. Die Nuten 20, in denen der Schlauch 21 liegt, bilden also hier die zweite Kammer.

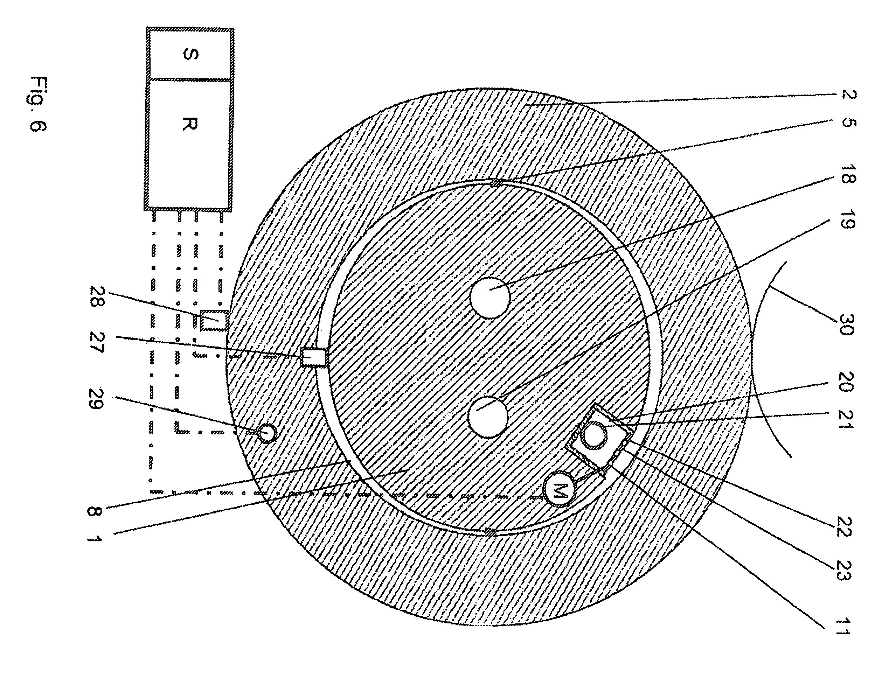

Es sei darauf hingewiesen, dass die Ausführungsbeispiele die bevorzugte Ausgestaltung einer Walze als S-Walze, also sogenannte Schwimmende Walze, zeigen. Die Erfindung ist aber ebenso anwendbar, wenn die Walze zur Durchbiegungseinstellung hydrostatische Stützelemente aufweist (wie beispielsweise in der Fig. 6 der DE-A- 36 38 070 ). In diesem Fall könnten die erste und die zweite Kammer beispielsweise so angeordnet sein, dass die hydrostatischen Taschen, deren Taschendruck auf den Mantel wirkt, die erste Kammer bilden, und unterhalb oder innerhalb des Stützelementes ein Blasenspeicher vorgesehen ist, der die zweite Kammer bildet.

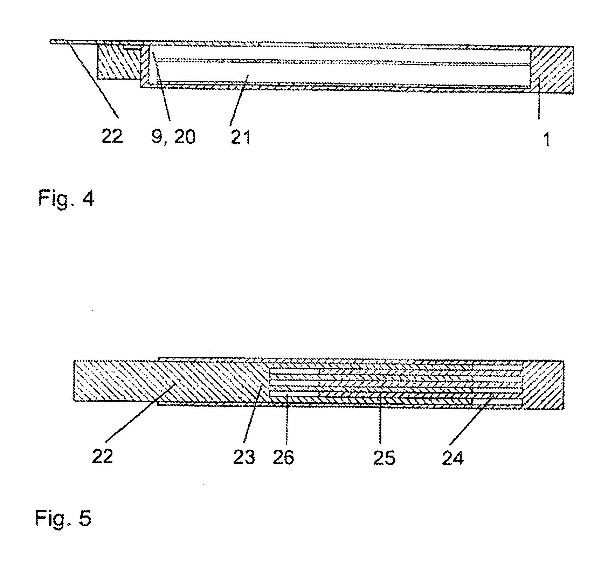

Die Fig. 4 und 5 zeigen nun eine für die Erfindung beispielhafte Ausgestaltung der Deckel 22 in der Nut 20 der S-Walze, die die Änderbarkeit von Drosselanzahl und/oder Drosselquerschnitt und/oder Drossellänge ermöglichen. In Figur 4 ist ein Längsschnitt durch die Längsnute 20, die die zweite Kammer bildet, zu erkennen. Unter dem Bezugszeichen 21 ist der Schlauch angedeutet. Wichtig ist, dass der Deckel 21 aus zwei Teilen, nämlich zwei Kämmen 23 und 24 besteht, was in Fig. 5 deutlicher zu sehen ist. Wenigstens einer dieser Kämme ist verschiebbar, so dass die Zinken 25 beider Kämme, die ineinander greifen, gegeneinander und/oder relativ zu einander bewegbar sind. Durch eine solche Bewegung können mehr oder minder große Öffnungen 26 entstehen, die letztendlich eine Drosselöffnung mit veränderbarem Strömungswiderstand darstellen.

In Fig. 6 ist dargestellt, wie die Walze schließlich gesteuert wird. Mit dem Bezugszeichen 30 ist einen Gegenwalze angedeutet, die mit der Walze einen Nip zur Behandlung einer Faserstoffbahn bildet. Damit ist das kleinstmögliche Walzensystem dargestellt. Die Walze ist wieder als S-Walze ausgebildet mit Zentralachse 1 und Walzenmantel 2. Rechts und links an der Zentralachse 1 erkennt man jeweils eine Längsdichtung 5, die somit zur Ausgestaltung zweier halbringförmiger erster Kammern 7 und 8 zwischen Zentralachse 1 und Mantel 2 beitragen. Angedeutet ist auch eine Flüssigkeitszuleitung 18 und eine Entleerleitung 19.

Die Zentralachse besitzt wenigstens eine Längsnute 20, die der beschriebenen zweiten Kammer entspricht. Ein gasgefüllter Schlauch 21 ist darin integriert. Vorzugsweise ist der Gasdruck in dem Schlauch einstellbar.

Abgedeckt wird die zweite Kammer 20 durch einen Deckel 22, der in diesem erfindungsgemäßen Beispiel wenigstens einen Kamm 23 aufweist, der verschiebbar ist. Durch eine Verschiebung wird der Öffnungsquerschnitt der Drossel 11 mehr oder weniger geöffnet.

Um die Drosselwirkung zu steuern ist mit dem Symbol M ein Verstellmotor angedeutet. Über eine mechanische, pneumatische, elektrische oder pneumatische Verknüpfung mit dem Kamm, kann dieser bewegt werden. Der Verstellmotor M wird durch eine Rechnereinheit R angesteuert, nachdem diese verschiedene Messsignale von Sensoren ausgewertet hat. Zu diesen Sensoren gehört ein Schwingungssensor 27, beispielsweise eine Beschleunigungsaufnehmer zur Detektion der Schwingungen der Zentralachse 1. Weiterhin ist ein Schwingungssensor 28 zur Ermittlung der Schwingungen des Mantels 2 vorgesehen. Außerdem ist ein Messgerät 29 zum Erhalt der Manteldrehzahl notwendig.

Nach der Ermittlung der Messwerte werden sie mit in einem Speicher S hinterlegten Kenngrößen verglichen, aufgrund derer nun wiederum Stellgrößen abgegeben werden, gemäß denen die Drossellänge, der Drosselquerschnitt oder die Drosselanzahl eingestellt werden. dabei werden auch weitere Parameter, wie beispielsweise Grammatur des jeweils im Nip befindlichen Papiers, Faserrohstoff bzw. Füllstoffe im Papier, Linienlast, Geschwindigkeit oder Temperatur berücksichtigt.

Für die vornehmlichen beiden Systemeigenfrequenzen ergibt sich demnach die folgende Ansteuerung.

Bei der ersten gekoppelten Jocheigenfrequenz ist die Vorgehensweise:
Die Schwingung der Zentralachse 1 wird z.B. mit mindestens einem Beschleunigungsaufnehmer 27 detektiert. Ob die Schwingung kritisch ist oder nicht, wird zunächst über das Triggersignal in einer Rechnereinheit R entschieden. Da nur ganzzahlige Vielfache der Drehfrequenz der Walze kritisch sind für die Entstehung von Barring, brauchen auch nur diese Frequenzen bedämpft bzw. minimiert werden. Da die Zentralachse 1 und der Mantel 2 gegenphasig schwingen, kann über die Veränderung der Stellparameter der Drosseln 11 zusammen mit der Steifigkeit des Schlauches 21 (also eines Druckspeichers) schnell die Schwingung semi-aktiv minimiert d.h. gedämpft werden. Es werden bei diesem Verfahren keine gegenphasigen Schwingungen aufgebracht, sondern die Schwingung wird adaptiv gedämpft, indem ein Phasenversatz von 50° bis 130° eingestellt wird zwischen der Schwingung der Zentralachse 1 und der Schwingung des Mantels 2.

Für die erste Kontakteigenfrequenz wird folgende Strategie eingesetzt:
Die Schwingung der Achse wird mit dem Beschleunigungsaufnehmer 27 detektiert. Ob die Schwingung kritisch ist oder nicht, wird zunächst über das Triggersignal entschieden. Da nur ganzzahlige Vielfache der Drehfrequenz der Walze kritisch sind für die Entstehung von Barring, brauchen auch nur diese Frequenzen bedämpft bzw. minimiert werden. Da die Zentralachse 1 und der Mantel 2 gleichphasig aber mit unterschiedlicher Amplitude schwingen, kann über die Veränderung der Stellparameter der Drosseln zusammen mit der Steifigkeit des Druckspeichers schnell die Schwingung adaptiv minimiert d.h. gedämpft werden. Es werden hier keine gegenphasigen Schwingungen aufgebracht, sondern die Schwingung wird adaptiv gedämpft, indem ein Phasenversatz von 50° bis 130° eingestellt wird zwischen der Schwingung der Zentralachse 1 und der Schwingung des Mantels 2.
Um beide Frequenzen gleichzeitig bedämpfen zu können muss ein geeigneter Kompromiss der diversen Einflussparameter gefunden werden.

Die optimale Wirkung des Dämpfers kann im Betrieb dadurch eingestellt werden, dass das Schwingverhalten durch Veränderung der beiden Parameter 1) Steifigkeit des Blasenspeichers (Gasdruck) und 2) Spaltbreite bzw. Drosseldurchmesser abgetastet bzw. aufgezeichnet und dann optimiert wird. Hierdurch ergibt sich eine besonders feinfühlige Anpassung an unterschiedliche Linienlasten, Geschwindigkeiten, Temperaturen und Grammaturen des jeweils produzierten Papiers usw.

Es wird daher weiterhin vorgeschlagen, dass für die jeweils gewünschten Betriebsparameter entsprechende Kennfelder für minimale Schwinggeschwindigkeiten in einem Speicher S der Steuerung hinterlegt werden, so dass eine einfache Anpassung aufgrund vorab gewählter Parameter für die Regelung sehr einfach möglich ist.

### Bezugszeichenliste

- 1: Zentralachse
- 2: Walzenmantel
- 3: Pendelrollenlager
- 4: Deckel
- 5, 5a: Längsdichtung
- 6: Stirndichtanordnung
- 7: Halbringförmige Kammer
- 8: Halbringförmige Kammer
- 9: Zweite Kammer, Querbohrung
- 10: Zweite Kammer, Querbohrung
- 11: Drossel
- 12: Drossel
- 13: Feder
- 14: Stopfen
- 15: Stopfen
- 16: Schlauchabschnitt
- 17: Schwebekolben
- 18: Flüssigkeitszuleitung
- 19: Entleerleitung
- 20: Zweite Kammer, Längsnute
- 21: Schlauch
- 22: Deckel
- 23: Kamm
- 24: Kamm
- 25: Zinken
- 26: Öffnung
- 27: Schwingungssensor
- 28: Schwingungssensor
- 29: Drehzahl-Messgerät
- 30: Gegenwalze
- A: Lagerstelle
- B: Lagerstelle
- R: Rechnereinheit
- S: Speichereinheit
- M: Stellmotor

## Patentansprüche

1. Verfahren zur Vermeidung von Barringerscheinungen in einem Walzensystem, bestehend aus mindestens einer Walze und einer Gegenwalze, wobei die eine Walze mit einer feststehenden Zentralachse (1) und mit einem um diese Zentralachse rotierenden Walzenmantel (2) sowie mit den folgenden Merkmalen versehen ist:
a) eine im Inneren der Walze befindliche erste Kammer (7) ist mit einer Flüssigkeit gefüllt, die zumindest mittelbar eine hydraulische Stützkraft von der Zentralachse (1) auf den Walzenmantel (2) übertragen kann;
b) die erste Kammer (7) ist über wenigstens eine Drossel (11, 12), die einen Drosselquerschnitt und eine Drossellänge aufweist, mit einer ebenfalls im Inneren der Walze befindlichen zweiten Kammer (9, 10, 20) verbunden;
c) die zweite Kammer (9, 10, 20), die nur teilweise mit Flüssigkeit gefüllt ist, so dass sich darin, aufgrund von Druckänderungen in der ersten Kammer (7), ein veränderbarer Flüssigkeitsfüllungsgrad einstellen kann, **dadurch gekennzeichnet, dass**
durch Sensoren aufgenommene Signale zum Schwingungsverhalten der Achse und des Mantels und von der Drehzahl des Mantels in einer Rechnereinheit ausgewertet werden und daraufhin während des Betriebs des Walzensystems
- Drosselanzahl und/oder
- Drosselquerschnitt und/oder
- Drossellänge
derart verändert werden, dass der Phasenversatz zwischen der Schwingung des Walzenmantels (2) und der Schwingung der Zentralachse (1) einen Wert von 50° bis 130° einnimmt.

2. Verfahren nach Anspruch 1, **dadurch gekennzeichnet, dass** der Phasenversatz zwischen der Schwingung des Walzenmantels (2) und der Schwingung der Zentralachse (1) auf einen Wert von 80° bis 100° eingestellt wird.

3. Verfahren nach Anspruch 1 oder 2, **dadurch gekennzeichnet, dass**
- Drosselanzahl und/oder
- Drosselquerschnitt und/oder
- Drossellänge
automatisch, vorzugsweise in einem Regelkreis, mechanisch, elektrisch, pneumatisch oder hydraulisch eingestellt werden.

4. Verfahren gemäß einem der Ansprüche 1 bis 3, **dadurch gekennzeichnet, dass**
- Drosselanzahl und/oder
- Drosselquerschnitt und/oder
- Drossellänge
aufgrund eines Vergleichs der Auswertungsergebnisse mit in einem Speicher (S) einer Rechnereinheit (R) hinterlegten Kenngrößen verändert werden.

5. Verfahren nach Anspruch 4, **dadurch gekennzeichnet, dass** die Kenngrößen von wenigstens einem der folgenden Parameter abhängig sind:
- Grammatur des jeweils im Nip befindlichen Papiers,
- Faserrohstoff bzw. Füllstoffe im Papier,
- Linienlast,
- Geschwindigkeit,
- Temperatur.

6. Verfahren gemäß einem der Ansprüche 1 bis 5, **dadurch gekennzeichnet, dass** man die Höhe des Druck eines Gaspolsters, der Kraft einer Feder oder dgl. in der zweiten Kammer (9, 10, 20) zusätzlich einstellt.

## Claims

1. Method for avoiding barring phenomena in a roll system comprising at least one roll and an opposing roll, where the one roll is provided with a stationary central shaft (1) and with a roll shell (2) rotating around this central shaft and with the following features:
a) a first chamber (7) located in the interior of the roll is filled with a liquid which is able to transmit a hydraulic supporting force at least indirectly from the central shaft (1) to the roll shell (2);
b) the first chamber (7) is connected via at least one throttle (11, 12), which has a throttle cross section and a throttle length, to a second chamber (9, 10, 20), likewise located in the interior of the roll;
c) the second chamber (9, 10, 20) is only partly filled with liquid, so that a variable liquid filling level can be set therein on the basis of pressure changes in the first chamber (7); **characterized in that**
signals picked up by sensors and relating to the vibration behaviour of the shaft and of the shell and from the rotational speed of the shell are evaluated in a computer unit and then, during the operation of the roll system
- throttle number and/or
- throttle cross section and/or
- throttle length
are varied in such a way that the phase offset between the vibration of the roll shell (2) and the vibration of the central shaft (1) assumes a value of 50° to 130°.

2. Method according to Claim 1,
**characterized in that**
the phase offset between the vibration of the roll shell (2) and the vibration of the central shaft (1) is set to a value of 80° to 100°.

3. Method according to Claim 1 or 2,
**characterized in that**
- throttle number and/or
- throttle cross section and/or
- throttle length
are set automatically, preferably in a control loop, mechanically, electrically, pneumatically or hydraulically.

4. Method according to one of Claims 1 to 3,
**characterized in that**
- throttle number and/or
- throttle cross section and/or
- throttle length
are varied on the basis of a comparison of the evaluation results with characteristic values stored in a memory (S) of a computer unit (R).

5. Method according to Claim 4,
**characterized in that**
the characteristic values depend on at least one of the following parameters:
- grammage of the paper respectively located in the nip,
- fibrous raw material and fillers in the paper,
- linear load,
- speed,
- temperature.

6. Method according to one of Claims 1 to 5,
**characterized in that**
the level of the pressure in a gas pad, the force of a spring or the like in the second chamber (9, 10, 20) is additionally set.

## Revendications

1. Procédé pour éviter les phénomènes de barrage dans un système de rouleaux, constitué d'au moins un rouleau et d'un rouleau conjugué, l'un des rouleaux étant muni d'un axe central fixe (1) et d'une enveloppe de rouleau (2) tournant autour de cet axe central et présentant les caractéristiques suivantes :
a) une première chambre (7) se trouvant à l'intérieur du rouleau est remplie de liquide qui peut transmettre, au moins de manière indirecte, une force de support hydraulique depuis l'axe central (1) à l'enveloppe de rouleau (2) ;
b) la première chambre (7) est connectée par le biais d'au moins un étranglement (11, 12) qui présente une section transversale d'étranglement et une longueur d'étranglement, à une deuxième chambre (9, 10, 20) se trouvant également à l'intérieur du rouleau ;
c) la deuxième chambre (9, 10, 20) n'est remplie de liquide que partiellement, de telle sorte qu'un degré de remplissage de liquide variable puisse s'établir à l'intérieur de celle-ci, en raison de variations de pression dans la première chambre (7),
**caractérisé en ce que**
des signaux reçus par des capteurs, relatifs au comportement d'oscillation de l'axe et de l'enveloppe et de la vitesse de rotation de l'enveloppe sont analysés dans une unité d'ordinateur et ensuite, pendant le fonctionnement du système de rouleau
- le nombre d'étranglements et/ou
- la section transversale d'étranglement et/ou
- la longueur d'étranglement
sont modifiés de telle sorte que le déphasage entre l'oscillation de l'enveloppe de rouleau (2) et l'oscillation de l'axe central (1) adopte une valeur entre 50° et 130°.

2. Procédé selon la revendication 1, **caractérisé en ce que** le déphasage entre l'oscillation de l'enveloppe de rouleau (2) et l'oscillation de l'axe central (1) est ajusté à une valeur de 80° à 100°.

3. Procédé selon la revendication 1 ou 2, **caractérisé en ce que**
- le nombre d'étranglements et/ou
- la section transversale d'étranglement et/ou
- la longueur d'étranglement
sont ajustés automatiquement, de préférence dans un circuit de réglage, mécaniquement, électriquement, pneumatiquement ou hydrauliquement.

4. Procédé selon l'une quelconque des revendications 1 à 3, **caractérisé en ce que**
- le nombre d'étranglements et/ou
- la section transversale d'étranglement et/ou
- la longueur d'étranglement
sont modifiés sur la base d'une comparaison des résultats d'analyse avec des grandeurs caractéristiques consignées dans une mémoire (S) d'une unité d'ordinateur (R).

5. Procédé selon la revendication 4, **caractérisé en ce que** les grandeurs caractéristiques dépendent d'au moins l'un des paramètres suivants :
- grammage du papier se trouvant à chaque fois dans le pinçage,
- matière fibreuse brute ou charges dans le papier,
- charge linéaire,
- vitesse,
- température.

6. Procédé selon l'une quelconque des revendications 1 à 5, **caractérisé en ce que** l'on ajuste en outre l'intensité de la pression d'un coussin de gaz, de la force d'un ressort ou similaire, dans la deuxième chambre (9, 10, 20).
